# EUROPEAN PATENT APPLICATION

(11) **EP 4 763 943 A1**
(43) Date of publication of application: **24.06.2026**
(21) Application number: 24222621.5
(22) Date of filing: 20.12.2024
(51) Int. Cl.: C09K 8/58, E21B 43/16

(54) **METALLOGELS FOR ENHANCED OIL RECOVERY**

(71) Applicant: Masarykova Univerzita, 60177 Brno (CZ)
(72) Inventor: Asgharian Marzabad, Mahya, Brno (CZ); Marek, Radek, Brno-Zebetin (CZ); Jurcek, Ondrej, Neslovice (CZ)
(74) Representative: Harber IP s.r.o.

(57) **Abstract**

The invention discloses a metallogel of folic acid and a metal salt. Furthermore, the invention relates to a kit for forming metallogel in an oil reservoir, comprising folic acid solution and a metal salt solution. An aspect of the invention is a method of extracting oil from an oil reservoir using a metallogel, comprising the step of injecting a folic acid solution and a metal salt solution into the oil reservoir.

## Description

### Field of Art

The present invention relates to gels for enhanced oil recovery.

### Background Art

Enhanced oil recovery (EOR) is a method of the extraction of crude oil from an oil field. EOR functions by altering the chemical composition of the oil in order to facilitate its extraction. Three primary techniques of EOR are gas injection, thermal injection and chemical injection. Chemical injection involves the use of polymers and water, improving the vertical and areal sweep efficiency as a consequence of improving the water/oil mobility ratio.

Chromium-based polymeric gels are especially potent in enhancing oil recovery from unconventional reservoirs (e.g., with fractured formations). The gels act as conformance control agents that decrease water cuts in the oil fractions harvested and/or provide gas shutoffs. The process of employing chromium-based gels is generally simple; gel precursors are prepared in solution and injected into the reservoir to modify the flow of fluid and to increase the displacement of oil. To optimize the gelation processes and to ensure optimal oil recovery operations, a choice of gel components, their concentrations, operating temperature, and the environmental and geological conditions must be considered carefully. Alongside these, there are also concerns of environmental safety, acute to chronic toxicity, sustainability, and naturally the cost. A number of promising, mostly polymer-based, metallogels have been studied with positive outputs in field tests. For example, many oilfields in China have already undergone conformance control using chromium gels, *e.g*., the Huoshaoshan block in the Xinjiang oilfield. This block was developed by water injection in its early stage, but the poor physical properties of the original heterogenous formation led to development of fractures resulting in low oil recovery. Field experiments with organic chromium gels were done in five groups of water injection wells, where the daily oil production of the 10 corresponding oil wells increased from 20.2 tons to 35.9 tons, and the water content of the fluid produced decreased from 59.5% to 46.2% (S. Yan, X. Jian-yong, Z. Guanyou, C. Xinzhi, L. Zhongjun, L. Chenggang, Y. Yongxin, Xinjiang Petroleum Geology, 2012, 33, 198-200).

In general polyacrylamide-based chromium(III) gels are the most studied group of conformance control agents. However, drawbacks in their use are usually their low thermal stability and their sensitivity to high salinity. For these reasons, there is an ongoing search for advanced gel materials which can provide a broader range of applications in oil mining processes, while, maintaining overall safety and low cost.

### Disclosure of the invention

An aspect of the invention is a metallogel of folic acid and a metal salt.

An aspect of the invention is a kit for forming metallogel in an oil reservoir, comprising folic acid solution and a metal salt solution.

An aspect of the invention is a method of extracting oil from an oil reservoir using a metallogel, comprising the step of injecting a folic acid solution and a metal salt solution into the oil reservoir.

The folic acid solution and a metal salt solution may be injected into the oil reservoir in any sequence. In particular, the following injection sequences are possible:
- injecting a folic acid solution into the oil reservoir and subsequently injecting a metal salt solution into the oil reservoir; or
- injecting a metal salt solution into the oil reservoir and subsequetly injecting a folic acid solution into the oil reservoir; or
- injecting a mixture of a metal salt and folic acid in solution into the oil reservoir.

An embodiment of the invention is a method of extracting oil using a metallogel, comprising the steps of:
- mixing a folic acid solution and a metal salt solution to form a sol mixture, and
- injecting the sol mixture into the oil reservoir before it undergoes the sol-gel transition.

The metal in the metal salt is selected from metals of groups IA, IIA and transition metals. In particular, the metals are monovalent, divalent or trivalent metallic cations. Preferably, the metal is selected from chromium, zinc, nickel, manganese, calcium, potassium, sodium, magnesium. Combinations of metals may be used. Most preferably, the metal is chromium.

The metal salt contains an anion of an organic or inorganic acid, such as chloride, nitrate, carbonate, sulfate or acetate, preferably chloride, nitrate or acetate. Furthermore, the metal salt contains a cation of the metal as defined herein above. The metal salt is preferably chromium nitrate, chromium chloride or chromium acetate. Most preferably, the metal salt is chromium acetate.

Formation and properties of metallogels may to some extent depend on the specific combination of an anion and a metal cation. A skilled person would be easily able to test the combinations to choose the metallogels forming easily at desired concentrations and having the optimum required properties for the specific use and conditions in a specific oil reservoir. The time needed for gelation may easily be influenced by the selection of metal salt(s) and concentrations.

The folic acid solution and the metal salt solution are preferably aqueous solutions or aqueous/DMSO solutions. The aqueous/DMSO solutions are aqueous solutions containing dimethylsulfoxide as a co-solvent, in an amount ranging from 3 vol.% to 100 vol.%, relative to the volume of water, preferably in an amount ranging from 8 vol.% to 60 vol.%, relative to the volume of water. The amount of dimethylsulfoxide may affect the gelation time and have an effect on gel properties.

Metallogels are formed by folic acid at extremely low concentrations, from 0.05 wt%. More preferably, the concentration of folic acid is 0.07 wt% or more.

Preferably, the folic acid concentration is 0.05 wt% to 0.7 wt%, preferably 0.07 wt% to 0.5 wt%.

The molar ratio of metal (metal atom) to folic acid is preferably 6:1 to 1:50, more preferably 6:1 to 1:30, yet more preferably 5:1 to 1:7, most preferably 2:1 to 2:1.

The temperature range for gel formation is preferably from 20 to 180 °C, more preferably from 20 to 150 °C. Typical temperatures of gel decomposition start at about 200 °C.

The time of the gel formation preferably ranges between 4 and 168 hrs, more preferably between 24 and 168 h, most preferably about 4 days.

Folic acid alone (without metals) is used for gelation in biotechnological applications. The resulting folic acid gels formed in aqueous environment or in DMSO/water systems are mechanically weak which limits their application outside the biotechnology field.

Folic acid or folates in the form of liquid crystals or hydrogels are known to form tetrameric structures through hydrogen bond interactions among pterin heterocycles (*Hoogsteen*-bonded tetrad), assemblies analogous to those of the G-tetrads. These disk-like arrays further self-assemble through π-π-stacking to form tertiary columnar structures (similar to the well-known G-quadruplexes) where they are continuously rotated to each other, generating chiral columns. These columns further aggregate into fibrils, which entangle into a 3D fibrillar network of gels. This structure may help in achieving desired properties in metallogels of the invention.

The inventors have found that folic acid forms metallogels with a wide range of salts of monovalent, divalent, and trivalent metal cations. Particularly favourable properties were shown for chromium as a metal. However, the gelation may also be aided by metals present in situ.

In case of aqueous/DMSO solvent mixture, the gels of the invention are formed so that the effective deprotonation of a carboxylic group of the folic acid is omitted and the formation of strong coordination bonds between metal salts and carboxylates is less abundant. It can play an important role when a mixture of salts is used, *e.g*., in secondary/tertiary oil mining field tests, gelation is performed in the presence of seawater having excessive amounts of Ca²⁺ or Mg²⁺ which can lead to unwanted partial precipitation of the gelator (folic acid) and thus decrease the effective gelator concentration resulting in gels with low mechanical strength and poor homogeneity. In our approach, the metal-gelator interaction is majorly mediated through ion-dipole interactions within FA tetrads. Although it is a weaker non-covalent force, its cooperativity is exceptionally robust and leads to strong gels even in the presence of a multicomponent mixture such as seawater (experiments shown below).

In case of aqueous solutions, folic acid is turned into a salt (folate) using a base. The salt can further easily undergo both metal coordination with carboxylates and ion-dipole interactions with FA tetrads. This ultimately results in gels which are more fluid than in the case of aqueous/DMSO solvent mixture.

Selected metallogels were tested in simulated seawater conditions, their ageing, and scrutiny of thermal stability profiles. In particular, the folic acid-Cr(III)-acetate metallogel shows particularly suitable properties for EOR and good resistance to external stress. The use of sustainable FA provides the metallogel with stability, but also healable, thixotropic, and time-controllable properties that can offer a new direction in EOR.

The FA-Cr(III)-acetate (FA = folic acid) metallogel is particularly suitable for oil recovery applications as shown in proof-of-concept experiments. Results of the laboratory study show that this novel gel technology will be operational and is environmentally attractive for field tests, bringing benefits over current solutions. The metallogels introduced in our technology represent a single-fluid system, *i.e*., the simple addition of a single aqueous or DMSO/aqueous solution to a seawater phase leads to gelation, where the strength of the gel can be controlled by the choice of metal salt or by varying the concentrations or the component ratio, which ultimately makes the gels applicable to a wide range of oilfield requirements and environmental and geological conditions. A single concentrated solution of the gelator (folic acid) and a metal salt can easily be injected *in situ* into a volume of seawater to produce a gel with the properties required for the oil mining processes. Stable gels can be achieved under various conditions and over a substantial range of FA to metal salts ratios, suggesting that precise formulations, which might be generally difficult to achieve during the field work, are not necessary prerequisites for practical and successful applications of the gels', further increasing the attractiveness of our systems.

Chromium(III) acetate is typically present in the form of a cluster [Cr₃O(O₂CCH₃)₆(OH₂)₃](O₂CCH₃). Thus, one molar equivalent of the metal salt chromium(III) acetate corresponds to three molar equivalents of chromium atoms. In other words, FA:Cr(III)-acetate ratio 1:1 corresponds to 1:3 ratio of FA:Cr(III).

The folic acid (vitamin B₉) gelator represents sustainable, non-toxic, and green gelator. The metallogels of the invention thus have environmental advantages. Folic acid can be easily biodegraded after a relatively short time and is not harmful for the environment nor humans. The metals used occur naturally and do not represent an environmental burden, either. The folic acid can form metallogels at extremely low concentrations (acting as a supergelator). An entire family of gels, ranging from highly flowing to rigid gels, can be produced by varying the gelation conditions for this gelator and using various metal salts, thus the gels can be applicable to a wide range of oilfield problems and uses. The folic acid is a broad-spectrum metal salt gelator having thus low sensitivity to composition of geological environment. The gel formation is not conditioned by exact composition of the gelation mixture which is also beneficial for practical field applications. The folic acid metallogels are healable and thixotropic (rapid recovery of strength after critical strain impulse). The metallogels show stability in seawater and thermal stability up to 200 °C.

In general, DMSO as a co-solvent does not pose any significant environmental risk and can have some additional benefits, *e.g*., it helps to improve the thermal stability of gels, decreases the total volume needed for *in situ* injection, and exhibits a higher viscosity and good miscibility with aqueous solution that is related to the slow diffusion throughout the aqueous volume that supports the formation of a homogenous and stable gel.

### Examples

Materials and Methods:
Folic acid (FA) (>98.0%) was purchased from TCI (Tokyo Chemical Industry). Sodium nitrate, sodium chloride, magnesium(II) nitrate (98%), magnesium(II) chloride (98%), potassium nitrate, potassium chloride, calcium(II) nitrate, calcium(II) chloride, basic chromium(III) acetate, chromium(III) nitrate (99%), chromium(III) chloride (99%), manganese(II) nitrate (98%), nickel(II) nitrate (99.9%), nickel(II) chloride (98%), copper(II) nitrate (99.5%), copper(II) chloride (99%), zinc(II) nitrate and, zinc(II) chloride salts were purchased from Abcr GmbH (Germany); manganese(II) chloride (>98.0%) was purchased from Fluorochem Ltd. In general, basic chromium(III) acetate is present in the form of a cluster [Cr₃O(O₂CCH₃)₆(OH₂)₃](O₂CCH₃). Out of salts shown in the examples, such structural complexity can only be observed for chromium(III) acetate. Thus, one molar equivalent of chromium(III) acetate is in the following examples understood as one mole of a cluster [Cr₃O(O₂CCH₃)₆(OH₂)₃](O₂CCH₃), a single metallic building unit. The central Cr₃O cluster was then also found to be largely stable under the gelation conditions as confirmed by IR spectroscopy. It should be understood that FA:Cr(III)-acetate ratio 1:1 corresponds to 1:3 ratio of FA:Cr(III). Dimethyl sulfoxide (DMSO) was purchased from Lach-Ner. The simulated seawater was prepared by dissolving NaCl (0.48 M), MgSO₄ (0.03 M), CaCl₂ (0.01 M), and KCl (0.01 M) in distilled water. The saturated brine was prepared by dissolving NaCl (4.8 M), MgSO₄ (0.3 M), CaCl₂ (0.1 M), and KCl (0.1 M) in distilled water.

### Rheology

Because of the gel preparation procedure for some of the samples, the *in situ* gelation in the rheometer was not possible. Therefore, premade and stabilized gels were used for all the experiments. The stability of the gels was monitored using time-sweep experiments for 60 min. For all experiments, TA AR2000 stress-controlled rheometer with parallel-plate geometry (20 mm steel plate) equipped with a Peltier heated plate was used. The measuring setup was covered with a sealing lid to prevent solvent evaporation. First oscillatory amplitude sweep studies were conducted from 0.01 to 200% strain with an angular frequency of 6.28 rad/s at 20 °C to establish the linear viscoelastic region (LVR) of the gels. Time sweep studies up to 60 min and oscillatory frequency sweeps were performed after the loading using a strain within the LVE range (0.1%). For step-strain experiments, the gels were subjected for alternating 0.1% and 150% strains for 60 s for each cycle. Temperature sweep experiments were carried out in temperature ramps from 20 to 90 °C (heating cycle) and from 90 to 20 °C (cooling cycle) with 0.1% strain amplitude and 5 °C/min heating rate. For all the samples, experiments were carried out in duplicates.

### Fourier Transform Infrared Spectroscopy (FT-IR)

FT-IR spectra were measured at room temperature with a Nicolet 6700 FT-IR spectrometer (USA) equipped with a standard mid-IR source, KBr beam splitter, and DTGS detector and with the cell compartment purged by dry nitrogen during all the measurements. The FT-IR spectra were obtained by placing a known amount of the gel samples directly on sample slot. The spectra were collected at the spectral range 600-4000 cm⁻¹, with a resolution 2 cm⁻¹, 512 scans, using Happ-Genzel apodization function.

### Circular Dichroism (CD)

CD spectra were recorded using spectropolarimeter Jasco J-815. The spectra were recorded at 25 °C in 0.2 mm cell in the range 450 - 250 nm (data pitch 1 nm, D.I.T. 2 sec, bandwidth 1.00 nm, scanning speed 100 nm/min, and 6 accumulations).

### UV-Vis Spectroscopy

UV-visible absorption spectra were recorded using Agilent Cary 60 spectrophotometer (USA) with customized sample chamber (which can be fitted with cuvettes and solid samples) in the range of 200-800 nm. The UV-Vis spectra of neat FA in DMSO, FA in DMSO:water, and FA-metallogel (all at 0.4 wt%) were recorded at room temperature with 1 mm quartz cuvette or fitting the solid gel samples in the holder. The position and shift of the absorption peaks were used to analyze the interaction between FA molecules and metal salts.

### ¹H-NMR and Variable Temperature (VT) ¹H-NMR Spectroscopy

¹H NMR spectra were recorded using a Bruker Avance III HD 700 MHz spectrometer. All ¹H NMR spectra are referenced to the residual internal signal of DMSO-*d*₅ of DMSO-*d*₆ solvent (2.5 ppm). The temperature was gradually changed from 298.2 K to 348.2 K for variable-temperature ¹H NMR experiments. Data were analysed using Mestrenova Program (v1.13).

### Differential Scanning Calorimetry (DSC)

Thermogravimetric data of the samples were acquired using Perkin Elmer STA 6000 thermogravimetric TG/DSC analyser run under Pyris^{™} software. DSC curves were recorded under air atmosphere (flow rate of 40 mL/min) with a heating rate of 10 °C/min and temperature range of 20-95 °C for the wet gel samples and 22-622 °C for dry gel samples. The wet samples were prepared in an aluminium cup with a hermetic lid, the dry samples were measured in an open platinum holder. The sample weights were varying from 4 to 10 mg. Temperature calibration of the analyser was made using melting points of the indium (156.6 °C), zinc (419.5 °C), and aluminium (660.3 °C) standards. The weight balance was calibrated with standard weight at room temperature.

### Scanning Electron Microscopy (SEM)

For SEM imaging, the preformed metallogels were freeze-dried. The resulting aerogels were placed onto a conductive carbon tape placed on an aluminium stub. The specimen was sputter coated with gold. For SEM imaging, field-emission scanning electron microscope (FEI Versa 3D SEM or Carl Zeiss AG - EVO^{®}50 Series SEM) was used.

### Transmission Electron Microscopy (TEM)

For TEM, specimen preparation was carried out by adding 3-5 µL of the sample on a 300-mesh copper grid with holey carbon support film. In all cases premade gel was heated until it turned into a clear solution and the hot solution was used for drop casting. The excess liquid was blotted using filter paper before drying under ambient conditions. The images were acquired using Jeol F200 S/TEM microscope operated at 200 keV and Gatan Digital Micrograph^{®} software.

### Preparation and properties of metallogels:

### Preparation of gels

General procedure of 0.4 wt% metallogel preparation is as follows, 4.0 mg of FA powder was added into a vial containing 0.5 mL of DMSO (DMSO-*d*₆ for ¹H NMR analysis) and equipped with a magnetic stir bar. The mixture was heated to 70 °C under stirring. Meanwhile, 1 equimolar amount of metal salt was dissolved in 0.5 mL of distilled water (D₂O for ¹H NMR analysis) (amounts in Table 1). After complete dissolution of both components, the solution of metal salt was added to the FA solution. The resulting mixture was stirred at 70 °C until a transparent solution was formed. The final solution was cooled down to room temperature and kept at that temperature without any disturbance. The gelation was recognized by inverting the glass vial - gelation time varied from minutes to days depending on the metal salts used.

All metallogels were prepared using the same approach where the weight of FA and metal salts were also modified based on the desired concentration of the gel.

### Rheological Properties of Metallogels

The metallogels were studied for their unique rheological properties such as self-healing, thixotropy, and thermal stability. We have used oscillatory shear rheological measurements to determine the mechanical properties of the FA metallogels. Accordingly, frequency-sweep, time-sweep, strain-sweep, temperature-sweep, and step-strain experiments were performed. For rheological studies, the 0.4 wt% premade metallogels were used.

The time-sweep experiment provides insights into the kinetics of gelation. The gelation behavior of the samples was monitored for up to 60 minutes after loading to rheometer. The elastic modulus G' was found to be 0.1 kPa, 0.4 kPa, and 0.8 kPa, for FA-KCl, FA-MnCl₂, and FA-CrCl₃, respectively. Thus, in the case of chlorides, the gel stiffness follows the order: monovalent < divalent < trivalent cation. The trend was similar when the nitrate salts were used. Metallogels containing various divalent cations seem to have similar properties based on the comparison of their G' values. The time-sweep experiments for different anions of Cr³⁺, using chloride, nitrate, and acetate in varying concentrations were also studied. In general, the higher the concentration of components, the stiffer the metallogel. Neat FA (without a metal salt), 0.4 wt% in DMSO:water (1:1 by volume) could not be used for comparison with the metallogels as the sample does not form a gel (up to about 1.0 wt%).

Frequency-sweep experiments of selected monovalent, divalent, and trivalent chlorides, nitrates, and acetates were performed. Typically, the storage modulus G' is greater than the loss modulus G" over an entire range of frequencies in the linear viscoelastic region (LVR). In our experiments, G' values are an order of magnitude higher than those of G", suggesting that all materials under study are viscoelastic solids (Table 1). For all the metallogels studied, the frequency-sweep results show that G' and G" are independent of the frequency (remain approximately constant from 0.1 to 50 rad/s). The storage modulus G' decreased in the order Cr³⁺>Mn²⁺>K⁺ for chlorides and nitrates. When the anions were varied in the case of the Cr³⁺ salt, the G' followed the order FA-Cr(III)-acetate>FA-Cr(NO₃)₃>FA-CrCl₃. Notably, among all the metal salts tested, the Cr(III)-acetate forms the strongest gels. The G' of FA-Cr(III)-acetate metallogel (4 kPa) was ~4 times higher than that of samples with Cr³⁴ nitrate or chloride salt. In another example comparing Cr(III)-acetate with KCl metallogels, the G' of Cr(III)-acetate metallogel is even 40 times higher. The G' values increase further with increasing concentration of the FA-Cr(NO₃)₃ metallogel, indicating the impact of an increased density of cross-linkers on the mechanical properties of the metallogel. A reliable concentration study could not be performed with the FA-Cr(III)-acetate metallogels as they were found to be extremely strong and the samples slipped off the plates of the rheometer. Overall, the results suggest that the valency of the metal cations plays an important role in the stability and stiffness of the gel.

**Table 1. Amounts of metal salts used for metallogel preparation in 1 mL (0.4 wt% of FA, i.e., 4 mg of FA, molar ratio FA to metal salt 1: 1). G' and G" of metallogels (in DMSO:HzO 1:1 by volume, 0.4 wt% FA, 1 mL total volume) measured in frequency-sweep experiments, shown at 0.1 rad/s. FA = folic acid.**

| Metal salt/amount | G' (Pa) | G" (Pa) |
|---|---|---|
| NaCl/0.6 mg | 138.9 | 12.9 |
| MgCl₂/1.8 mg | 360.2 | 17.56 |
| KCl/0.7 mg | 144.1 | 13.63 |
| CaCl₂/1.0 mg | 545.3 | 50.06 |
| CrCl₃/2.4 mg | 790.5 | 29.3 |
| MnCl₂/1.8 mg | 371.8 | 16.36 |
| NiCl₂/2.1 mg | 245.8 | 10.12 |
| ZnCl₂/1.2 mg | 390.5 | 18.51 |
| NaNO₃/0.8 mg | 105.3 | 8.89 |
| Mg(NO₃)₂/2.3 mg | 227.2 | 10.96 |
| KNO₃/0.9 mg | 89.86 | 7.504 |
| Ca(NO₃)₂/2.1 mg | 391.7 | 20.34 |
| Cr(NO₃)₃/3.6 mg | 891 | 36.25 |
| Mn(NO₃)₂/2.3 mg | 290.8 | 11.17 |
| Ni(NO₃)₂/2.6 mg | 149.7 | 7.408 |
| Zn(NO₃)₂/2.6 mg | 337.7 | 14.22 |
| Cr(III)-acetate/5.4 mg* | 3685 | 157.8 |

| | | |
|---|---|---|
| * Calculated to trichromium(III) cluster [Cr₃O(O₂CCH₃)₆(OH₂)₃](O₂CCH₃) as one equivalent to FA (chromium acetate, basic: M_{W} = 603.32 g/mol). | | |

### Self-Healing and Recovery Studies

Step-strain experiments were performed to investigate the gel → sol transition and self-healing as the gel strength recovery (sol → gel). The gels showed a rapid decrease in G' in response to an increased strain 150 % by turning into viscoelastic liquids. The application of increased strain over 60 s further breaks the structure as shown by the gradual decrease in the G' values. Upon switching to a lower strain 0.1 %, the gels recover most of their original mechanical strength almost instantly, which demonstrates the rapid self-healing properties of FA-metallogels. Notably, in the step-strain experiments, the recovery in the first cycle is not 100% of the original value. However, in the following cycles they fully recover to the second G' value. This is presumably due to a rearrangement of the gel structure in the first cycle. The process can be repeated for several cycles (in our experiments, for 3 cycles). The step-strain rheological data for FA-metallogels of KCl, MnClz, and CrCl₃ show that for FA-metallogels with KCl and MnCl₂ the equilibrium point was not reached compared to that of CrCl₃ This suggests that the gels require a longer time (rest time) to recover completely (recovery percentage for the first cycle is shown in Table 2). Similar recovery behavior was also found for nitrates. When three different salts of chromium were compared, the metallogel made of FA-Cr(III)-acetate showed the highest recovery of 95% in the first cycle. In general, all of the FA-metallogels with Cr³⁺ showed high recovery in their first cycle compared to other metal ions. The percentage recovery in the first cycle increased from 50 to 90% as the concentration was increased from 0.2% to 1.0% of FA-Cr(NO₃)₃ metallogels. Therefore, the results suggest that the extent of recovery depends positively on the strength of the gel. The strength of the gel depends on the metal cations and the concentration, and lesser on the counter anion used. Self-healing was also observed with macroscopic gel samples. For these experiments we prepared a freestanding 1.0 wt% of FA-NaCl gel. The gel was cut into pieces which were subsequently re-joined together. After 24 h, a uniform gel piece which could be lifted without any breakage was re-formed. Furthermore, immediate transition from sol to gel was observed when the FA-Cr(III)-acetate metallogel (0.2 wt%) sample was subjected to intense mechanical perturbation using vortexing. The sol returned to the gel state immediately when vortexing was stopped. The results suggest that the gels are particularly mechanically robust, self-healing, and thixotropic.

**Table 2. G' at frequency strain 0.1 rad/s and its recovery after three gel ↔ sol cycles (FA 0.4 wt% , MS:FA = 1:1 (molar), in DMSO:H₂O 1:1 by volume). MS = metal salt.**

| Metal salt | G' (Pa) | Recovery (%) |
|---|---|---|
| NaCl | 138.9 | 50 |
| MgCl₂ | 360.2 | 41 |
| KCl | 144.1 | 61 |
| CaCl₂ | 545.3 | 49 |
| CrCl₃ | 790.5 | 72 |
| MnCl₂ | 371.8 | 36 |
| NiCl₂ | 245.8 | 44 |
| ZnCl₂ | 390.5 | 49 |
| NaNO₃ | 105.3 | 59 |
| Mg(NO₃)₂ | 227.2 | 64 |
| KNO₃ | 89.96 | 62 |
| Ca(NO₃)₂ | 391.7 | 51 |
| Cr(NO₃)₃ | 891 | 85 |
| Mn(NO₃)₂ | 290.8 | 32 |
| Ni(NO₃)₂ | 149.7 | 32 |
| Zn(NO₃)₂ | 337.7 | 54 |
| Cr(III)-acetate | 3685 | 95 |

### Temperature-Sweep Experiment

The gel → sol transition (melting profile) of metallogels was studied by temperature-sweep rheological experiments. The premade gels were heated (20-90 °C) and cooled (90-20 °C) and the moduli were followed. The gels showed rapid changes in their elastic moduli upon gel → sol transition, a typical characteristic of supramolecular gels. The elastic moduli of gels decreased by two orders of magnitude upon melting. Most of the gels showed the initiation of network melting (*Tₒₙₛₑₜ*) between 45-55 °C. Minima were recorded when the melting was completed (gel melting temperature *T_{gel}*), which was between 55-60 °C, depending on the gel under study (Table 3). Unlike for other gels, no gel → sol transition was observed for any chromium gel in the temperature range of the sweep experiments. This implies that chromium metallogels only soften during heating in this temperature range and do not melt. In the cooling cycle, the gels with lower G' values eventually reached the original G' values (loop). Significantly, for the FA-Cr(III)-acetate sample, the G' value decreased slightly as the temperature increased up to 60 °C and then slightly increased. Cooling the sample led to further increase in the storage modulus. Between the beginning and the end of the experiment, ΔG' was almost 2 kPa. This might imply that the gel network undergoes structural reorganization under heating leading to a stronger gel.

**Table 3. Gel melting temperatures (T_{gel}) as screened in temperature-sweep experiments between 20-90 °C (FA 0.4 wt%, MS:FA 1:1 (molar), DMSO:HzO 1:1 by volume).**

| Metal salt | Gel melting temperature (*T_{gel}*) |
|---|---|
| NaCl | 65.6 |
| MgCl₂ | 58.6 |
| KCl | 68.8 |
| CaCl₂ | 63.7 |
| CrCl₃ | Does not melt in given range |
| MnCl₂ | 56.3 |
| NiCl₂ | 55.4 |
| ZnCl₂ | 56.4 |
| NaNO₃ | 62.1 |
| Mg(NO₃)₂ | 56.3 |
| KNO₃ | 57 |
| Ca(NO₃)₂ | 58 |
| Cr(NO₃)₃ | Does not melt in given range |
| Mn(NO₃)₂ | 61.2 |
| Ni(NO₃)₂ | 59.5 |
| Zn(NO₃)₂ | 58.8 |
| Cr(III)-acetate | Does not melt in given range |

### Critical Strain and Yield Point

Beyond the linear-viscosity region, G' falls below G" and the gel transforms into a liquid-like form (sol). The rheological properties of soft materials display nonlinear behavior with a sudden decrease in their storage modulus above a certain strain level. This region is known as critical strain. The gel structure remains intact below the critical strain, but it is disrupted when the level of strain applied reaches above it. Thus, under high oscillatory stress, the solid-like gel begins to flow. The term "yield stress" or "yield point" is the value of the crossover of G" and G', representing the stiffness. Yield stress and critical strain values are useful for understanding the linear viscoelastic regime of soft materials. For FA-metallogels, the critical strain values varied from 61% to 97%, depending on the cation and counter anion (Table 4). For the Cr(NO₃)₃ metallogel, the critical strain values increased from 49% (for 0.2 wt% FA gel) to 98% (for 1.0 wt% FA gel).

**Table 4. Critical strain and yield point of metallogels (FA 0.4 wt% in DMSO:HzO 1:1 by volume, MS:FA 1:1 (molar)).**

| Metal salt | Critical strain (%) | Yield point (%) |
|---|---|---|
| NaCl | 5 | 49 |
| MgCl₂ | 15.4 | 97 |
| KCl | 24.3 | 61 |
| CaCl₂ | 15.6 | 48 |
| CrCl₃ | 12 | 87 |
| MnCl₂ | 19.5 | 97 |
| NiCl₂ | 19.5 | 77 |
| ZnCl₂ | 20 | 77 |
| NaNO₃ | 19.5 | 50 |
| Mg(NO₃)₂ | 19.5 | 61 |
| KNO₃ | 31 | 76 |
| Ca(NO₃)₂ | 15.6 | 97 |
| Cr(NO₃)₃ | 20 | 78 |
| Mn(NO₃)₂ | 20 | 98 |
| Ni(NO₃)₂ | 20 | 49 |
| Zn(NO₃)₂ | 16 | 97 |
| Cr(III)-acetate | 10 | 49 |

Systematic rheological experiments were performed for all gels of the study. The metallogels obtained with Na⁺, K⁺, Ni²⁺, and Mg²⁺ salts degraded after 3-4 weeks at room temperature, other gels were stable for months to a year. Interestingly, the FA-Cr(III)-acetate gel remained unchanged for over a year. Combinations of FA with chlorides, nitrates, and acetates of Na⁺, K⁺, Mg²⁺, Ca²⁺, Mn²⁺, Ni²⁺, Zn²⁺, and Cr³⁺ were investigated, out of which 17 supragels were prepared and studied. Comparing their storage modulus values G', the strength of the gels decreases in a row for chlorides and nitrates in the same way: Cr³⁺ > Ca²⁺ > Zn²⁺ > Mn²⁺ > Mg²⁺ > Ni²⁺ > Na⁺ > K⁺ (Table 1). Thus, the stability and networking of the gels increases as their valence increases. The FA-based metallogels show that their strengths are also affected by the counter anion, chlorides mostly resulting in stronger gels than nitrates. In the case of chromium(III)-based gels it seems that the effect of the cation represents a dominant factor in the strength of the gels with, exceptionally, the strongest gel formed using Cr(III)-acetate (it being also the only acetate-based metallogel found) (Table 1). This can also be assigned to the exceptional structure of the basic Cr(III)-acetate, which is often present in the form of trichromium(III) cluster [Cr₃O(CH₃CO₂)₆(OH₂)₃]⁺, but can also be present in its dissociated form as chromium(III) ions.

### Gelation Mechanism and Interactions

### Fourier Transform Infrared (FT-IR) Spectroscopy

The FT-IR spectra of samples of FA powder, Cr(III)-acetate, FA gel (DMSO:water 1:1), and FA-Cr(III)-acetate metallogel (DMSO:water 1:1) were compared. The FT-IR spectrum of FA powder in the range of 3600-3000 cm⁻¹ shows several vibrational bands: 3539 cm⁻¹, represents the stretching vibration band of -O-H in -COOH groups; 3412 and 3319 cm⁻¹, the antisymmetric and symmetric stretching vibrations (νₐₛ, νₛ) of -N-H in -NH₂ groups; and νₐₛ, νₛ of C-H at 2926, 2843 cm⁻¹. In comparison, the broad shifted bands at 3380 and 3284 cm⁻¹, present in both gel samples, suggest hydrogen bonding between FA molecules resulting in the formation of known pterin-based tetrads. In comparison, the spectrum of the metallogel shows an additional vibration at 3660 cm⁻¹ reflecting the stretching vibration of a free enolic -OH group and suggesting the presence of a lactim tautomer. The metallogel also shows very strong bands at 2987, 2972, and 2900 cm⁻¹ corresponding to the O-H vibrations of carboxyls and C-H, and N-H stretching. It has been shown, that these signals can also provide information on the structural organization mediated through a complex system of hydrogen bonding, while the peaks around 3012 cm⁻¹ are attributed to the organization in disc-like arrays, signals at 3150 cm⁻¹ would correspond to a ribbon-like pattern (missing in our case). At the lower wavenumbers, the absorption bands of C=O stretching of the -COOH or -CONH- groups of FA at 1690 and 1620 cm⁻¹, respectively, and the -NH- of -CONH- at 1602 cm⁻¹ merged into a wide absorption band at 1647 cm⁻¹ in both gel samples indicating the involvement of these groups in hydrogen bonding (and possibly also in metal coordination). Comparing the spectra of both gels, the common strong broad band at 1647 cm⁻¹ belongs to the C=O stretching of CONH, COOH, or a conjugated carboxyl. The characteristic absorption band of the phenyl ring at 1480 cm⁻¹ in FA powder, shifts to 1400 cm⁻¹ in gels. There are also several differences between the gels: the O-H bending band is larger for the metallogel sample, and the metallogel shows an additional aromatic amine C-N vibration at 1250 cm⁻¹ and an alcohol C-O stretching vibration at 1050 cm⁻¹. In both gels we can observe the strong S=O stretching vibrations at 1012 and 951 cm⁻¹ of the DMSO molecules.

Based on the differences observed between the FA-gel and metallogel we hypothesize that FA undergoes a partial chemical transformation in the presence of a chromium salt which subsequently directs the 3D self-assembly into the complex network of a metallogel. The pH of FA-Cr(III)-acetate gel is 6, which suggests that the FA is majorly present mostly in the form of folate. Previous studies have shown tautomerism of folate that it is present in aqueous solution in the form of an equilibrium mixture of N3 and N1-lactams (keto-tautomers) rather than as a lactim (enol-tautomer). The addition of Cr(III)-acetate can lead subsequently, to establishing a new equilibrium among various forms, *e.g*., the presence of acetate can stabilize the hydrogen bonding of lactams but also lactim forms and the lactam tetrads bind the Cr(III) ion through ion-dipole interactions. In general, several chemical forms of FA seem to be present in the complex structure of the FA-Cr(III)-acetate metallogel at the same time, which makes it rather difficult to describe in detail using IR spectroscopy. Nevertheless, this method provides us with valuable initial information on the gel structure that can be further evaluated by a combination of other analytical techniques.

### CD Spectroscopy

A FA solution (0.2 wt%) in DMSO (40 µL) and a FA (0.2 wt%) with chromium(III) acetate in DMSO (40 µL) were measured first. Then a FA gel and a FA-Cr(III)-acetate metallogel in DMSO:H₂O mixture 1: 1 were measured for comparison. The gel samples were prepared, thus: FA solution (0.2 wt%) in DMSO (20 µL) was placed in a cuvette, water (20 µL) was added, and the resulting solution was mixed. For the metallogel, an aqueous solution (20 µL) of chromium(III) acetate (FA:metal 1:1) was added to the FA solution (0.2 wt%) in DMSO (20 µL) and mixed. The CD spectra of DMSO and DMSO:water were measured as blank.

The spectra of FA in DMSO with and without metal salts show no chiral self-assemblies at the given concentrations of the components; any molecular chirality is silent in the CD spectra. On the other hand, the addition of water to the DMSO solution induces significant changes in the spectra because a supramolecular chiral self-assembly is formed. In the case of neat FA, the spectral shape is characterized by a broad positive band with maximum at 267 nm, followed by a broad negative band at 285 nm, which further continues to a positive band at 308 nm, complemented by a lower very broad positive band at 341 nm and a similar but negative band at 393 nm. The addition of chromium(III) acetate leads to significant changes in the spectrum and the disappearance of several of the bands characteristic for neat FA. The intensity of the negative band at 283 nm significantly increases and is complemented by a weak band at 321 nm, after which the spectrum approximates to zero, but still has a very broad negative band at around 390 nm. These show a presence of loose *Hoogsteen*-bonded tetramers and their pterin-mediated π-π stacking into larger columnar helical aggregates, which would be characteristic for intercalation of Cr(III) inside the tetrade. The glutamate side-chain is rather mobile in the structure, not directly affecting the chiral aggregation, but driving additionally the self-assembly of gel network through coordination with other metal cations, likely in the form of *tris*-cluster.

### UV-Visible Spectroscopy

UV-Vis spectra of FA in DMSO, and FA-gel and FA-Cr(NO₃)₃-metallogel in DMSO:H₂O (1:1) were measured at 0.4 wt% and at room temperature. The absorption bands of the pterin ring in the FA-DMSO solution appear at 284 and 352 nm and are attributed to π→π* and n→π* transitions, respectively. The corresponding absorption bands of the pterin ring in the FA gel show the bathochromic shift of 7 nm and 10 nm, respectively, which indicates that FA molecules self-assemble in the DMSO:H₂O solvent mixture through π-π stacking interactions in a J-type aggregate. J-aggregates are represented by an "angle of slippage" larger than 32° (the angle between the line of centres of a column of molecules and the long axis of any one of the parallel molecules). Thus the heterocycles stacked on top of each other in tetrads are rotated to each other forming a helical supramolecular structure. This can be further supported by decreasing the absorption intensity of the peak at 291 nm. In the case of FA-Cr(NO₃)₃-metallogel, the absorption bands of pterin show an additional 8 nm bathochromic shift as well as additional lowering of the absorbance when compared to FA gel, which is connected to the effect of electrostatic ion-dipole interactions of the metal to the carbonyls of the pterin tetrad and additional aggregation in this complex gel network.

### ¹H-NMR Spectroscopy and Variable Temperature NMR

NMR spectroscopy experiments have been used to reveal the non-covalent interactions involved in gel formation and its dynamics. However, the NMR spectroscopic characterization of certain metal complexes is a challenging task because some of them are paramagnetic. Therefore, out of all of the samples studied, the FA-KCl, FA-NaCl, FA-ZnCl₂, and FA-Zn(NO₃)₂ gel samples were selected for the NMR studies as diamagnetic species, and one representative of the paramagnetic group of metals, Cr(III)-acetate, was included.

Initially, we measured the ¹H NMR spectrum of the FA sample in DMSO-*d*₆ and in the mixture DMSO-*d*₆:D₂O 1:1. Whereas the FA in DMSO-*d*₆ provides a single set of ¹H NMR signals, the FA solution in the mixture DMSO-*d*₆:D₂O 1:1 provides two sets of broader ¹H signals, suggesting the involvement of water molecules in the FA self-assembly, possibly *via* hydrogen bonding. The very broad ¹H signals for carboxylic acid groups and -NH₂ can also suggest the formation of intermolecular H-bonding. Moreover, the absence of a signal for hydroxyl protons in DMSO-*d*₆ supports our hypothesis that the lactim tautomer is not significantly represented in the sample. The overlapping sets of signals, a major and a minor set in approximately 4:1 ratio, have a chemical shift difference Δδ = 0.08 ppm, where the minor set is at lower frequencies. Their presence can have several explanations, related to the previous structural studies. The major signal set can represent the formation of hydrogen bonded tetrads with the minor set representing their short oligomeric π-π-stacked aggregates or even a ribbon-like assembly in solution. When analyzing the NMR data we should also keep in mind that large(r) polymeric aggregates are not visible in a regular solution-state ¹H NMR spectrum. Thus, we cannot see the pivotal gel polymeric framework but only small fragments of its possible building blocks. A comparison of the spectrum of neat FA with spectra of various FA metallogels at 0.4 wt% in DMSO-*d*₆:D₂O 1:1 mixture was performed. Several differences can be observed in the ¹H NMR spectra. The minor second set of signals observed in the neat sample of FA disappears in all of the metallogels studied, likely because of metal-induced aggregation into larger aggregates. In the Zn(NO₃)₂ sample, next to the familiar major signal set, a new second set of signals appears at higher frequencies with Δδ = 0.20 ppm. This may represent tetrads carrying Zn²⁺. ZnCl₂, NaCl, and KCl samples provide only a single set of signals similar to the major signals of neat FA representing free tetrads. In general, chlorides form stronger gels than nitrates, which could be translated here into a more effective polymerization into gel fibers using chlorides rather than nitrate. Finally, the addition of paramagnetic Cr(III)-acetate leads to a significant broadening of all FA signals and the appearance of a new signal at 8.21 ppm (this may originate from a signal of coordinated species - a paramagnetic shift of some proton signal). The minimal differences between the spectrum of neat FA and its metallogels can be further elucidated. The FA molecules that participate directly in the formation of the polymeric gel network are not visible (or their ¹H signals are very broad) in the ¹H NMR spectrum. Therefore, the observed ¹H signals originate from those FA molecules which are present freely or in smaller aggregates in the solution. In order to suppress the effect of water on the gelation of FA and to see any possible changes in the chemical shifts of FA induced by interactions with metal salts, we performed an ¹H NMR titration experiment of FA DMSO-*d*₆ solution with Zn(NO₃)₂. The FA DMSO-*d*₆ solution gives only one set of NMR signals and there are no changes in the spectra upon the addition of metal salt, except for a broadening of the -NH_{c}-signal. Finally, variable temperature (VT, from 298.2 K to 348.2 K) ¹H NMR experiments were carried out to follow on sol-gel and the gel-sol transitions of FA gel (0.2 wt%) and FA metallogels (0.8 wt% of FA; using Zn(NOs)z, ZnCl₂, NaCl, KCl, and Cr(III)-acetate in 1:1 ratio with FA) prepared in a DMSO-*d*₆:D₂O 1:1 mixture. In all cases a significant increase in the signal intensity was observed with increasing temperature of the sample, suggesting a gel → sol transition (melting of the gel leading to an increased concentration of small assemblies of FA). As in the temperature-sweep rheologic experiments, gradually cooling the samples inside the probe to 298.2 K led to a significant decrease in the intensity of the NMR signals' representing the sol → gel transition (gel recovery).

Even though we could not observe significant changes in the ¹H NMR spectra suggesting effective metal-FA interaction, we could follow the presence of smaller FA-aggregates. We can assume that the presence of metal cations leads to swift formation of larger polymeric aggregates which are not directly visible using liquid-state NMR.

### Differential Scanning Calorimetry (DSC)

For DSC studies, dry or wet samples were weighed into a pan and measured. In general, the thermal responsiveness of the gels is influenced by their structural features, *e.g*., nanofiber structure, and/or their crosslinking in the gels. The supramolecular gel network is therefore quite sensitive to temperature, particularly near the critical gelation temperature. For example, the DSC curve of the FA-Mg(NO₃)₂ sample shows endothermic peaks between 45 and 60 °C that account for the gel-solution phase transitions. On the other hand, the FA-Cr(III) salts gels do not follow the same trend as it shows only negligible decrease in heat flow over the temperature range. The Cr(III)-gels do not melt (they only soften), which is in agreement with the results of rheological temperature-sweep experiments and can also be observed from the VT ¹H NMR spectrum.

### Electron Microscopy (EM)

To investigate the structure of the supramolecular assemblies, we performed EM imaging of all of the gels studied. The TEM images of all 17 metallogels revealed the presence of highly entangled fibrillar networks. The diameter of the fiber varied from 5 to 50 nm. The type and size of the fiber were similar for all of the gels studied. However, in some cases, a strong film formed as the gels dried and prevented the extraction of finer details. For SEM imaging, the gels were freeze-dried before sputtering and imaging. The SEM images of freeze-dried gels also displayed highly entangled networks.

### Enhanced Oil Recovery (EOR) using FA-Cr(III)-acetate Metallogels

To further explore the potential applications of the FA-Cr(III)-acetate gel we carried out proof-of-concept experiments for oil recovery. Accordingly, experiments on the effect on gelation changing reagents' concentration and ratio (simulating possible dilution in oil reservoir) (Table 5 and 6) in time dependence were performed at ambient temperature and 150 °C (mimicking conditions of high temperature oil reservoirs). The formation of gel was also successfully studied at various concentrations down to 0.07 wt% FA at ambient temperature. Gels are also formed at various FA to Cr(III)-acetate molar ratios, i.e., from 1:1 down to 100:1 (Table 5). At 150 °C, strong gels are slowly formed at 0.4 wt% FA concentration within 24 h and are further stiffening for up to 7 days of the study (Table 6).

**Table 5. Timeline of gel formation and its strength in dependance on FA to Cr(III)-acetate molar ratio and temperature (water:DMSO = 1: 1 by volume).**

| Ratio FA:Cr(III)-acetate* | 10:1 (0.4 wt% FA) | | 20:1 (0.4 wt% FA) | | 50:1 (0.4 wt% FA) | | 100:1 (0.4 wt% FA) | |
|---|---|---|---|---|---|---|---|---|
| | RT | 150 °C | RT | 150 °C | RT | 150 °C | RT | 150 °C |
| Time (hr.) | | | | | | | | |
| 1 | A** | A | A | A | A | A | A | A |
| 2 | A | A | A | A | A | A | A | A |
| 4 | A | A | A | A | A | A | A | A |
| 8 | B | A | B | A | A | A | A | A |
| 24 | B | B | B | B | B | B | B | B |
| 48 | C | B | C | B | B | B | B | B |
| 72 | D | B | D | B | C | B | C | B |
| 96 | E | B | E | B | D | B | D | B |
| 168 | I | B | I | B | G | B | F | B |

| | | | | | | | | |
|---|---|---|---|---|---|---|---|---|
| * Calculated to trichromium(III) cluster [Cr₃O(O₂CCH₃)₆(OH₂)₃](O₂CCH₃) as one equivalent to FA (basic chromium acetate: M_{W} = 603.32 g/mol). ** Gel strength code by Sydansk: **A** No detectable gel formed: The gel appears to have the same viscosity (fluidity) as the original **FA** solution and no gel is visually detectable. **B** Highly flowing gel: the gel appears to be only slightly more viscous (less fluid) than the initial **FA** solution. **C** Flowing gel: most of the obviously detectable gel flows to the bottle cap upon inversion. **D** Moderately flowing gel: only a small portion (about 5 to 15%) of the gel does not readily flow to the bottle cap upon inversion usually characterized as a "tonguing" gel (i.e., after hanging out of jar, gel can be made to flow back into bottle by slowly turning bottle upright). **E** Barely flowing gel: the gel can barely flow to the bottle cap and/or a significant portion (>15%) of the gel does not flow upon inversion. **F** Highly deformable nonflowing gel: the gel does not flow to the bottle cap upon inversion. **G** Moderately deformable nonflowing gel: the gel flows about halfway down the bottle upon inversion. **H** Slightly deformable nonflowing gel: the gel surface only slightly deforms upon inversion. **I** Rigid gel: there is no gel-surface deformation upon inversion. **J** Ringing rigid gel: a tuning-fork-like mechanical vibration can be felt after tapping the bottle (was not detected using our system). | | | | | | | | |

**Table 6. Timeline of gel formation and its strength at 150 °C in 1: 1 FA to Cr(III)-acetate molar ratio in dependance on concentration of FA (water:DMSO = 1:1).**

| Time (hr.) | Concentration of FA | | |
|---|---|---|---|
| | 0.1 wt% | 0.2 wt% | 0.4 wt% |
| 1 | A** | A | A |
| 2 | A | A | B |
| 4 | A | A | C |
| 8 | A | A | C |
| 24 | B | B | E |
| 48 | B | B | H |
| 72 | B | B | H |
| 96 | B | B | H |
| 168 | B | B | I |

Effect of simulated seawater (salinity 33.5 g/L) on gel formation was also studied at ambient temperature and at 150 °C (Table 7). Rigid gel can be formed at ambient conditions as 0.4 wt% FA in seawater:DMSO mixture 1:1 by volume after 7 days. Flowing gel can be formed at 150 °C under the same conditions.

**Table 7. Timeline of FA:Cr(III)-acetate (1:1) gel formation (0.4 wt% FA in seawater:DMSO 1:1 by volume) and its strength at ambient temperature and 150 °C.**

| | Simulated seawater* | |
|---|---|---|
| | RT | 150 °C |
| Time (hr.) | | |
| 1 | A | A |
| 2 | A | A |
| 4 | B | A |
| 8 | B | A |
| 24 | C | B |
| 48 | D | B |
| 72 | E | B |
| 96 | H | C |
| 168 | I | C |

| | | |
|---|---|---|
| * a mixture of NaCl (0.48 M), MgSO₄ (0.03 M), CaCl₂ (0.01 M), and KCl (0.01 M) in distilled water (salinity 33.5 g/L) | | |

The stability of FA:Cr(III)-acetate metallogel (0.4 wt% FA, MS:FA 1: 1, water:DMSO 1: 1 by volume) was further confirmed in the presence of saturated brine solution (salinity, 335 g/L, a mixture of NaCl (4.8 M), MgSO₄ (0.3 M), CaCl₂ (0.1 M), and KCl (0.1 M) in distilled water), at room temperature but also under heating for 1 week at 150 °C.

Moreover, effect of thermal stress (heating the samples for 12 h at 100, 120, 150, 200, and 250 °C) and ageing the samples (0.2 wt% FA in water:DMSO or seawater:DMSO 1: 1 by volume, FA:Cr(III)-acetate 1: 1 molar ratio) for one year were followed by rheology measurements. Frequency sweep rheological experiments on these samples showed that the materials remained viscoelastic solids upon ageing or thermal treatment up to 200 °C. Time sweep experiments showed that the gel strength of the samples remained constant as followed for 60 min. Temperature sweep experiments further confirmed the good thermal stability of the gels within the 20-80 °C range. The thermally treated gels show a sudden drop in strength only at 250 °C (likely because of thermal decomposition of FA), whereas at the other lower temperatures studied, *i.e*., 100, 120, 150, and 200 °C, the gels increased in strength (likely the higher temperature leads to a thermodynamically favored rearrangement of the gel structure resulting in a stronger gel network) as followed from G' values (Table 8). Step strain and strain sweep experiments using the thermally treated samples showed critical strain values around 80% after one cycle, even in the presence of seawater. Their thixotropic behavior can further provide benefits in certain oil mining applications where injection of preformed gels is desirable, *i.e*., the gel technology can also be used in high permeability zones.

Overall, the results show that the FA-Cr(III)-acetate gels are mechanically robust, thermally stable, and maintain their self-healing and thixotropic properties. Moreover, the stability of the gels increases with increasing temperature up to 200 °C. The gels are not sensitive to the presence of other cations/anions in the solvent system, but quite the opposite, their mechanical strength increases in the presence of seawater (and furthermore upon heating) (Table 8).

**Table 8. The effect of seawater and temperature on elastic modulus (G') of FA:Cr(III)-acetate (1:1 molar ratio) gel (0.2 wt% FA in seawater/water:DMSO 1:1 by volume) measured at 20 °C.**

| Sample description | G' (Pa) |
|---|---|
| Water:DMSO (fresh) | 745 |
| Water:DMSO (1 year old) | 849 |
| Seawater:DMSO (fresh) | 1044 |
| Water:DMSO (heated at 100 °C for 12 h) | 1568 |
| Water:DMSO (heated at 120 °C for 12 h) | 1774 |
| Water:DMSO (heated at 150 °C for 12 h) | 4198 |
| Water:DMSO (heated at 200 °C for 12 h) | 5478 |
| Water:DMSO (heated at 250 °C for 12 h) | 234 |
| Seawater:DMSO (heated at 120 °C for 12 h) | 2365 |
| Seawater:DMSO (heated at 150 °C for 12 h) | 3663 |

We show that the metallogels of the invention overcome the currently known limitations of various polyacrylamide-based polymeric gels. The folic acid gelator and the folic-acid-Cr(III)-acetate-based gels show several beneficial features in a single system, which were not found together in any other gelation system for EOR. The folic acid shows undisturbed (or even elevated) ability of gelation in brine (33.5 g of salts/L), at elevated temperature 150 °C, and shows low gelation concentration of Cr(III)-acetate, in particular in water:DMSO 1: 1 by volume mixture. The folic acid is a broad spectral gelator with various metal salts, forming saline- and thermo-resistant adjustable gels made of non-toxic natural molecule. The folic acid can be a gelator for high and low permeability zones depending on gel formulation and application. The gels show high temperature resistance up to 200 °C. Moreover, the metallogels made of folic acid are thixotrophic and healable, thus the quality of the gel does not change by shearing during pumping or flowing through pore throats, making it also capable to perform under dynamic reservoir conditions.

## Claims

1. Metallogel of folic acid and a metal salt.

2. Metallogel according to claim 1, wherein the metal in the metal salt is chromium.

3. Metallogel according to claim 2, which is a metallogel of folic acid and chromium(III) acetate.

4. Metallogel according to any one of claims 1 to 3, wherein the molar ratio of the metal to folic acid is 6:1 to 1:50, more preferably 5:1 to 1:7.

5. A kit for forming metallogel in an oil reservoir, comprising folic acid solution and a metal salt solution, and optionally dimethyl sulfoxide.

6. The kit according to claim 5, wherein the metal salt is chromium(III) acetate.

7. Method of extracting oil using a metallogel, comprising the step of injecting a folic acid solution and a metal salt solution into the oil reservoir.

8. Method according to claim 7, wherein the injection of a folic acid solution and a metal salt solution is performed by:
- injecting a folic acid solution into the oil reservoir and subsequently injecting a metal salt solution into the oil reservoir; or
- injecting a metal salt solution into the oil reservoir and subsequetly injecting a folic acid solution into the oil reservoir; or
- injecting a mixture of a metal salt and folic acid in solution into the oil reservoir.

9. Method according to claim 7 or 8, wherein the solution is a solution in water or in a mixture of water and dimethylsulfoxide, wherein the amount of dimethyl sulfoxide ranges from 3 vol.% to 100 vol.%, relative to the volume of water.

10. Method according to any one of claims 7 to 9, wherein the metal salt is chromium(III) acetate.

11. Method according to any one of claims 7 to 10, wherein the concentration of folic acid is 0.05 wt% or more, preferably 0.07 wt% to 0.5 wt%.

12. Method according to any one of claims 7 to 11, wherein the molar ratio of the metal to folic acid is 6:1 to 1:50, more preferably 5:1 to 1:7.

13. Metallogel according to any one of claims 1 to 4 for use in enhanced oil extraction.
